# EUROPÄISCHE PATENTSCHRIFT

(11) **EP 2 627 921 B1**
(45) Veröffentlichungstag und Bekanntmachung des Hinweises auf die Patenterteilung: **07.01.2015**
(21) Anmeldenummer: 11776454.8
(22) Anmeldetag: 01.11.2011
(51) Int. Cl.: F16C 19/54, F16C 19/38

(54) **BAUGRUPPE ALS LAGERANORDNUNG ZUR DREHENDEN LAGERUNG VON MASCHINEN- UND ANLAGENTEILEN**
ASSEMBLY AS BEARING ARRANGEMENT FOR THE ROTATIONAL MOUNTING OF MACHINE AND PLANT PARTS
BLOC EN TANT QU'ENSEMBLE PALIER POUR LE MONTAGE ROTATIF DE PARTIES DE MACHINE ET D'INSTALLATION

(30) Priorität: 17.11.2010 DE 102010052117
(43) Veröffentlichungstag der Anmeldung: 21.08.2013
(73) Patentinhaber: IMO Holding GmbH, 91350 Gremsdorf (DE)
(72) Erfinder: FRANK, Hubertus, 91315 Höchstadt (DE)
(74) Vertreter: Küchler, Stefan
(86) Internationale Anmeldenummer: PCT/EP2011/069179
(87) Internationale Veröffentlichungsnummer: WO 2012/065840

(56) Entgegenhaltungen:
- EP-A1- 1 677 005
- EP-A1- 2 172 665
- DE-A1-102007 019 482
- DE-A1-102008 046 624

## Beschreibung

Die Erfindung betrifft eine Lagerbaugruppe, insbesondere ein mehrreihiges Großwälzlager, für den Einsatz in Windkraftanlagen gemäß dem Oberbegriff des Anspruchs 1 sowie ein Lager, insbesondere Großwälzlager zur Lagerung von Komponenten wie einem Rotor einer Windkraftanlage oder einem Kran.

Aktuell im Einsatz befindliche Hauptlager für Windkraftanlagen sind in häufigen Fällen Rollendrehverbindungen. In vielen aktuellen Windkraftanlagen werden insbesondere dreireihige Rollendrehverbindungen verwendet - zumeist ohne Verzahnung, wobei in speziellen Anlagen, beispielsweise in speziellen getriebelosen Anlagen, auch verzahnte Hauptlager Anwendung finden. Als Hauptlager für Windkraftanlagen haben sich derzeit mehrreihige Rollendrehverbindungen durchgesetzt. Die mehrreihige Ausführung wird insbesondere deswegen gewählt, weil dadurch Axialkräfte und Radialkräfte aufgenommen werden können, die üblicherweise bei der Hauptlagerung einer Windkraftanlage auftreten.

So beschreibt beispielsweise die DE 10 2007 019 482 A1 ein mehrreihiges Großwälzlager, insbesondere ein Axial-Radiallager zur Hauptlagerung der Rotorwelle einer Windkraftanlage (abgek.: WKA), im Wesentlichen bestehend aus einer senkrecht angeordneten kreisringförmigen Außenscheibe, einem koaxial zu dieser Außenscheibe angeordneten Innenring sowie zwei axial beidseitig neben der Außenscheibe angeordneten kreisringförmigen Wellenscheiben wobei zwischen den beiden Wellenscheiben und der Außenscheibe zumindest jeweils eine Reihe durch je einen Lagerkäfig in gleichmäßigen Abständen gehaltener Wälzkörper abrollt und ein erstes sowie ein zweites Wälzlager zur Aufnahme axialer Kräfte bildet, während zwischen der Außenscheibe und dem Innenring zumindest eine weitere Reihe optional durch einen weiteren Lagerkäfig in gleichmäßigen Abständen gehaltener Wälzkörper angeordnet ist und ein drittes Wälzlager zur Aufnahme radialer Kräfte bildet, dadurch gekennzeichnet, dass die beiden Wälzlager zur Aufnahme axialer Kräfte durch zwei Kegelrollenlager gebildet werden, deren als Kegelrollen ausgebildete Wälzkörper mit ihren kleineren Stirnseiten jeweils zur Lagerlängsachse gerichtet sind.

In der technischen Schrift DE 203 14 660 U1 wird ebenfalls ein Rotor-/Hauptlager zur Lagerung eine Rotors angeführt, wobei hierbei insbesondere Zylinderrollen, aber auch möglicherweise Kegelrollen, als Wälzkörper verwendet werden können.

Letztlich beschreibt auch die Patentanmeldung DE 10 2008 046 218 A1 ein Radialwälzlager mit einer Innenringanordnung, welche eine Innenlaufbahn trägt, mit einer Außenringanordnung, welche einen Außenlaufbahn trägt, mit einer Reihe von Rollen welche zwischen der Innenlaufbahn und der Außenlaufbahn abwälzend angeordnet sind, wobei die Rollen jeweils um eine Rollendrehachse rotieren, gekennzeichnet durch eine Reihe von Kugeln, wobei die einzelne Kugel zur Abstützung an einem Innenberührpunkt der Innenringanordnung, an einem Außenberührpunkt der Außenringanordnung und einem Rollenberührpunkt an einer der Rollen ausgebildet ist.

Der Erfindung liegt die Aufgabe zugrunde, ein System zu schaffen, welches die Vorteile der Verwendung von Kegelrollen in mehrreihigen Hauptlagern für Windkraftanlagen nutzt, und bei dem zugleich die Nachteile der ungleichmäßigen Lastverteilung eliminiert oder zumindest verringert werden.

Diese Aufgabe wird zunächst durch die im Patentanspruch 1 aufgeführten Merkmale gelöst.

Bei der vorliegenden Erfindung gemäß Patentanspruch 1 werden die Vorteile der zentrierenden Wirkung bei Verwendung von Kegelrollen in Hauptlagern von Windkraftanlagen genutzt verbunden mit den Vorteilen, welche sich aus einer an mehreren Stellen abgestützten axialen Lagerung ergeben.

Die Lösung der zum Nachteil gereichenden Probleme gemäß dem herkömmlichen Stand der Technik gelingt insbesondere, wenn eine erfindungsgemäße Baugruppe vorhanden ist beinhaltend eine erste Kegelrollenwälzkörperanordnung und eine zweite Kegelrollenwälzkörperanordnung, welche übereinander liegen und parallel übereinander ausgeführt sind. Die rotatorische Wirkung besteht in der Drehung um eine Hauptachse, welche erfindungsgemäß ein Rotor einer Windkraftanlage sein kann.

Bei erfindungsgemäßen Ausgestaltungen liegt ein Nasenring mittig und dessen Nase wird von mindestens einem Tragring und mindestens einem Haltering umfasst und gelagert, insbesondere durch exakt einem Tragring und exakt einen Haltering. Die Lagerung erfolgt eben durch Kegelrollenwälzkörperanordnungen. Diese Kegelrollenwälzlageranordnungen dienen zur Aufnahme und Lagerung aller axialen Kraftanteile. Erfindungsgemäß sind diese Kegelrollenwälzlageranordnungen dabei parallel zueinander angeordnet. Dies bedeutet, die Ebenen dieser aller Kegelrollenwälzkörperanordnungen, in welchen sich diese Kegelwälzkörperanordnungen bei rotatorischer Bewegung um die axiale Hauptachse, beispielsweise die Hauptachse des sich drehenden Rotors einer Windkraftanlage, drehen, schneiden sich in der Praxis nicht, d.h. innerhalb technisch relevanter Entfernungen und/oder Toleranzen.

Aufgrund dieses wesentlichen Merkmals der erfindungsgemäßen Baugruppe fallen die Schnittpunkte der Rotationsebenen der Kegelrollenwälzkörperanordnung nicht in einem Punkt zusammen, auch nicht im Bereich der Mitte der gesamten Lagerbaugruppe, welche durch die Hauptachse definiert wird. Dies hat zur Folge, dass ein gleichmäßigeres Abrollen in mehreren parellelen horizontalen Ebenen der Kegelrollenwälzkörperanordnungen erreicht wird, wenn die Kegelrollenwälkörperanordnungen im Betrieb der Baugruppe um die Hauptachse der Drehung rotieren. Geometrisch betrachtet ergeben sich dadurch unterschiedliche Orte, an denen sich diese Achsen bzw. horizontalen Ebenen mit der Hauptachse der Drehung schneiden.

Mindestens eine obere Kegelrollenwälzkörperanordnung ist dabei angeordnet zwischen dem mindestens einem Nasenring und dem mindestens einem Tragring und nimmt somit die axialen Kräfte auf, die zwischen Nasenring und Tragring übertragen werden sollen.

Die Ebene in welcher diese obere Kegelrollenwälzkörperanordnung um die Hauptachse rotiert, liegt demzufolge lotrecht zur Hauptachse, beispielsweise der Rotorachse.

Mindestens eine untere Kegelrollenwälzkörperanordnung ist demnach angeordnet zwischen dem mindestens einem Nasenring und dem mindestens einem Haltering und nimmt somit die axialen Kräfte auf, die zwischen Nasenring und Haltering übertragen werden sollen. Die Ebene in welcher diese untere Kegelrollenwälzkörperanordnung um die Hauptachse rotiert, liegt ebenfalls lotrecht zur Hauptachse, beispielsweise der Rotorachse, der Drehung.

Besonders vorteilhaft kann die Ausgestaltung der Erfindung sein, wenn innerhalb einer ersten Kegelrollenwälzkörperanordnung sowie innerhalb den weiteren Kegelrollenwälzkörperanordnungen jeweils mehrere unterschiedliche Sorten von Kegelwälzkörpern vorhanden sind. Dabei können die Abstände bzw. Höhen, die diese Kegelwälzkörper haben gleiches Maß betragen. Selbstverständlich kann pro Kegelrollenwälzkörperanordnung auch, wie regulär bekannt, nur eine Sorte von Wälzkörpern verwendet werden.

Die genannten Abstände, die gleichermaßen die Höhe der einzelnen Wälzkörper- Sorten innerhalb einer Kegelrollenwälzkörperanordnung bilden, können ein unterschiedliches Maß aufweisen. Das Gesamtmaß, also die Gesamthöhe einer Kegelrollenwälzkörperanordnung ist jedoch stets gleich groß, also konstant. In einer besonderen Ausgestaltung der Erfindung setzt sich diese Gesamthöhe aus mehreren einzelnen Sorten von Kegelrollenwälzkörpern innerhalb einer Körperanordnung zusammen

Stets konstant ist vorzugsweise die Steigung des Wälzkörperdurchmessers der jeweiligen Kegelrollenwälzkörperanordnung. Diese Steigung wird durch Steigungswinkel definiert. Diese Winkel sind zwar innerhalb einer Kegelrollenwälzkörperanordnung, also bezogen auf die Gesamthöhe einer Kegelrollenwälzkörperanordnung, stets konstant, sie können aber an der Ober- oder Unterseite einer solchen Kegelrollenwälzkörperanordnung unterschiedlichen Wert besitzen. Dies bringt den erfindungsgemäßen Vorteil mit sich, dass ein gewisser Anpressdruck des Nasenrings an Tragring beziehungsweise Haltering durch diese Steigungswinkel konstruktiv vorgegeben werden kann.

Bevorzugt verfügen sämtliche Kegelrollenwälzkörperanordnungen der Baugruppe über identisch gleiche Formen und Abmessungen. Dann gilt: Die Abmessungen und Winkel der mindestens einen oberen Kegelrollenwälzkörperanordnungen, haben gleiche Werte wie die Abmessungen und Winkel der mindestens einen unteren Kegelrollenwälzkörperanordnung. Es können auch die Abstände der Stirnseiten der Kegelrollenwälzkörperbahnen von der Hauptachse identisch sein.

In einer weiteren beispielhaften Ausgestaltung der Erfindung können diese Abstände der Stirnseiten der Kegelrollenwälzkörperbahnen von der Hauptachse unterschiedlich groß sein.

Besonders vorteilhaft ist gemäß der Lehre der Erfindung, wenn mindestens eine zusätzliche Wälzkörperanordnung senkrecht zu den Kegelrollenwälzkörperanordnungen existiert, welche alle auftretenden radialen Kräfte aufnimmt, die zwischen dem mindestens einen Nasenring und dem mindestens einen Tragring während des Betriebes oder Stillstandes der Baugruppe auftreten. Ebenso existiert dort mindestens eine Wälzkörperanordnung senkrecht zu den Kegelrollenwälzkörperanordnungen die alle radialen Kräfte aufnimmt, die zwischen dem mindestens einen Nasenring und dem mindestens einen Haltering auftreten.

Vorzugsweise kann diese mindestens eine zusätzliche Wälzkörperanordnung eine einzelne Zylinderrollenanordnung sein. Diese Zylinderrollenanordnung kann bestehen aus einzelnen Zyinderrollen als Wälzkörpern, oder aber auch aus Tonnenrollen oder regulären Kugeln, beispielsweise im Sinne der bekannten Ausgestaltungsform des Vierpunktkugellagers. Auch eine Kombination von mehreren Wälzkörpertypen ist, in einer noch weiteren Ausgestaltung der Erfindung, denkbar, solange dadurch auftretende radiale Kräfte aufgenommen werden.

Insbesondere sind gemäß der Lehre der Erfindung jeweils verschiedene Abschrägungen beziehungsweise schräge Ebenen vorgesehen, an welchen die benannten Kegelrollen im Betrieb der erfindungsgemäßen Baugruppe entlang gleiten oder daran abrollen. Diese schrägen Ebenen können eingebracht sein in Nasenring(en) und jeweils in Tragring(en) und jeweils in Haltering(en) der jeweils zueinander korrespondierenden schrägen Ebenen.

Praxisgemäß sind diese Ebenen oder schrägen Flächen in der Regel gefettet oder geölt, oder mit einem gängigen anderen Schmiermittel benetzt, um ein möglichst reibungsfreies gegenseitiges Verdrehen von Haltering(en) und Nasenring(en) sowie von Nasenring und Tragring zu ermöglichen. Zur besseren Führung aller oder einzelner Wälzkörper in deren jeweiligen Wälzkörperbahnen können Wälzkörperkäfige verwendet werden. Der Nasenring kann mit üblicherweise prinzipiell ohne Verzahnung oder aber mit segmentweiser Verzahnung, oder mit Verzahnung im Innen- oder Außenring ausgeführt sein.

Besonders wichtig für den Einsatz der erfindungsgemäßen Baugruppe sind Möglichkeiten der Befestigung an neben angeordneten und verbundenen Konstruktionen oder Vorrichtungen. Insbesondere werden erfindungsgemäß Bohrungen in die Baugruppe eingebracht, in welchen oder durch welche Schraubenartige Elemente geführt werden können, um Anschlusskonstruktionen an die Baugruppe entweder an Tragring(en), oder an Haltering(en), oder an Nasenring(en) zu befestigen.

In einer alternativen Lösung der gestellten Aufgabe gemäß Patentanspruch 9 umfasst das Lager einen Nasenring sowie koaxial zu dem Nasenring angeordnet und innenliegend einen Tragring und einen Haltering, wobei der Nasenring an einer radial in Richtung einer Hauptachse einwärts gewandten Seite wenigstens eine umlaufende Ausformung oder Nase aufweist, wobei wenigstens eine kegelstumpfförmige Wälzkörper umfassende erste Wälzkörperanordnung vorgesehen ist und wenigstens eine zylinderrollenförmige und/oder kegelstumpfförmige Wälzkörper umfassende zweite Wälzkörperanordnung vorgesehen ist, wobei eine der Wälzkörperanordnungen zwischen Nasenring und Tragring angeordnet ist und die jeweils andere der Wälzkörperanordnungen zwischen Nasenring und Haltering angeordnet ist und wobei jeweils eine Wälzkörperanordnung auf jeweils einer der Flankenflächen der Ausformung oder Nase unter Drehung der Wälzkörper um ihre jeweiligen Mittelachsen wälzt, so dass der Nasenring relativ zu Tragring und Haltering um eine mit Tragring und Haltering gemeinsame Hauptachse rotatorisch bewegbar ist und wobei die erste und die zweite Wälzkörperanordnung relativ zueinander so angeordnet sind, dass die Mittelachsen mehrerer, vorzugsweise aller, kegelstumpfförmigen Wälzkörper der ersten Wälzkörperanordnung in einer ersten Drehebene liegen und die Mittelachsen mehrerer, vorzugsweise aller, zylinderförmigen oder kegelstumpfförmigen Wälzkörper der zweiten Wälzkörperanordnung in einer zweiten Drehebene liegen und die erste Drehebene und die zweite Drehebene parallel zueinander ausgerichtet sind.

Der erfindungsgemäße Aufbau des Lagers erlaubt eine vorteilhafte Abstützung, bzw. Ableitung axialer Kräfte über die Wälzkörper in eine fest eingespannte Lagerkomponente, die insbesondere bei einer Verwendung des Lagers zur Lagerung einer Rotorachse einer Windkraftanlage entstehen. Besonders bei dynamischen Lastwechseln, die beispielsweise durch Böen induziert werden, ist eine gute Aufnahme und Ableitung der axialen Kräfte gewährleistet. Das Lager weist dadurch eine höhere Stabilität auf sowie eine gleichmäßige Lastverteilung innerhalb des Lagers. Unter parallel zueinander ausgerichtet ist zu verstehen, dass die Drehebenen zumindest innerhalb von technisch relevanten Entfernungen und/oder Toleranzen parallel sind.

In einer weiteren Ausführung der Erfindung weist die umlaufende Ausformung oder Nase einen im Wesentlichen trapezoiden, insbesondere schwalbenschwanzförmigen, und/oder sich in radialer Richtung nach außen oder von der Hauptachse wer hin verjüngenden Querschnitt aufweist, insbesondere wobei die Flankenflächen der Ausformung oder Nase wenigstens einen Winkel mit einer zur Hauptachse senkrechten Ebene einschließen, vorzugsweise einen Winkel von jeweils 1°, insbesondere so, dass die Flankenflächen der Ausformung oder Nase korrespondierend zu der Kegelstumpfform der kegelstumpfförmigen Wälzköper der ersten und zweiten Wälzkörperanordnung und/oder Wälzflächen des Tragrings und des Halterings ausgebildet sind, so dass die erste Drehebene und die zweite Drehebene parallel zueinander ausgerichtet sind,

Eine Ausformung oder Nase mit schwalbenschwanzförmigen Querschnitt bietet besonders stabile Wälzflächen für die Wälzkörper, die in vorteilhafter Weise gefertigt werden können. Gleichzeitig ermöglicht ein solcher Querschnitt in besonders einfacher Weise die parallele Ausrichtung der ersten Drehebene und der zweiten Drehebene. Aber auch andere trapezoide Formen sind je nach Beanspruchung des Lagers vorteilhaft.

In einer weiteren Ausführung der Erfindung umfassen die erste und zweite Wälzkörperanordnung im Wesentlichen identische kegelstumpfförmigen Wälzkörper umfassen, in denen ein Winkel (δ = Ω) definiert ist, der von einer Mantelfläche und einer Mittellachse des jeweiligen Wälzkörpers eingeschlossen ist, der vorzugsweise 1° beträgt.

Symmetrische kegelstumpfförmige Wälzkörper mit einem Winkel von δ = Ω = 1° haben sich als besonders vorteilhaft gegen eine Verkippung des Lagers in beiden Richtungen entlang der Hauptachse des Lagers erwiesen, wie sie beispielsweise bei Windböen auftreten kann. Zudem wird die Herstellung des Lagers vereinfacht, wenn ausschließlich identische Wälzkörper verwendet werden.

In einer alternativen Ausführung der Erfindung umfassen die erste und zweite Wälzkörperanordnung im Wesentlichen identische kegelstumpfförmigen, insbesondere schiefe kegelstumpfförmige, Wälzkörper umfassen, in denen wenigstens zwei Winkel (δ, Ω), insbesondere unterschiedlich, definiert sind, die von jeweils einer Mantelfläche und einer Mittellachse des jeweiligen Wälzkörpers eingeschlossen sind, insbesondere so, dass eine Vorspannung auf die erste und zweite Wälzkörperanordnung wirkt.

In einer derartigen Ausführung ist es möglich, einen Anpressdruck oder eine Vorspannung des Nasenrings an dem Tragring bzw. dem Haltering durch diese Steigungswinkel vorzugeben.

In einer weiteren Ausführung der Erfindung ist wenigstens eine weitere Wälzlageranordnung im Wesentlichen senkrecht zu den Drehebenen der ersten und zweiten Kegelrollenwälzkörperanordnung angeordnet, die zur Lagerung, insbesondere zur Aufnahme und/oder Weiterleitung, radialer Kraftanteile vorgesehen ist.

Durch eine Wälzkörperanordnung zur Aufnahme und Weiterleitung radialer Kraftanteile können beispielsweise Kraftanteile aufgenommen, bzw. abgeleitet werden, die aus dem Eigengewicht eines gelagerten Teiles resultieren, beispielweise einer Rotorachse einer Windkraftanlage.

In einer weiteren Ausführung der Erfindung ist wenigstens ein kegelstumpfförmiger Wälzkörper der ersten und /oder zweiten Wälzkörperanordung aus benachbart zueinander angeordneten ersten und zweiten Kegelwälzkörpern gebildet, die in montierter Position einen im Wesentlichen durchgängigen, zweiteiligen kegelstumpfförmigen Wälzkörper bilden, wobei der erste Kegelwälzkörper eine gleiche Länge aufweist wie der zweite Kegelwälzkörper oder wobei der erste Kegelwälzkörper eine andere Länge aufweist wie der zweite Kegelwälzkörper.

Durch das Vorsehen zweiteiliger Wälzkörper kann zum Einen die Montage vereinfacht werden und zum Anderen muss bei einem Schaden an einem Wälzkörper nicht der gesamte Wälzkörper ausgetauscht werden, sondern nur der beschädigte Teil. Ist beispielsweise bekannt, dass Schädigungen eher an einem vorderen Bereich des Wälzkörpers auftreten, so kann ein kleinerer Teilkörper diesen vorderen Bereich bilden, welcher dann bei Beschädigung ausgetauscht werden kann. Auf diese Weise ist eine Materialeinsparung über den Lebenszyklus des Lagers möglich.

In einer weiteren Ausführung der Erfindung umfasst wenigstens eine der Kegelrollenwälzkörperanordnungen einen Wälzkörperkäfig zur Führung der kegelstumpfförmigen Wälzkörper, vorzugsweise aus Messing oder einer Messinglegierung, der wenigstens teilweise radiale Anteile von auf das Lager wirkenden Kräften aufnimmt und/oder weiterleitet.

Ein Käfig aus, im Vergleich zum Stahl der Wälzkörper, weicherem Material gibt nach, so dass eine Art Gleitreibung entsteht. Besonders im Vergleich zu einer käfiglosen Führung, z.B. mit im Ring eingearbeiteten Führungen, weist ein Lager mit einem solchen Käfig in der Regel eine höhere Standzeit auf. Besonders vorteilhaft kann ein erfindungsgemäßes Lager in einer Windkraftanlage verwendet werden. Besonders die dort auftretenden Lastwechsel und dynamischen Beanspruchungen können gut durch ein erfindungsgemäßes Lager auffangen werden.

Weitere Merkmale, Eigenschaften, Vorteile und Wirkungen auf der Grundlage der Erfindung ergeben sich aus den folgenden Beschreibungen bevorzugte Ausführungsformen der Erfindung, sowie weiteren vorteilhaften Ausgestaltungen der Erfindung, sowie anhand der Zeichnungen. Hierbei zeigen:
FIG 1 eine erfindungsgemäße Ausführungsform einer Lageranordnung oder eines Lagers;
FIG 2 eine erfindungsgemäße Ausführungsform mit einer Hauptachse eines drehbar zu lagernden Teils;
FIG 3 eine erfindungsgemäße Ausführungsform mit mehrteiligen Wälzkörpern;

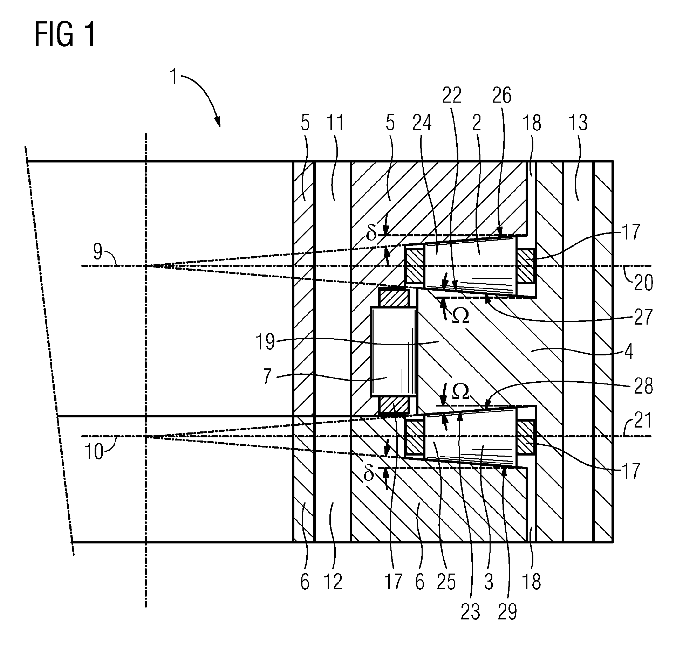

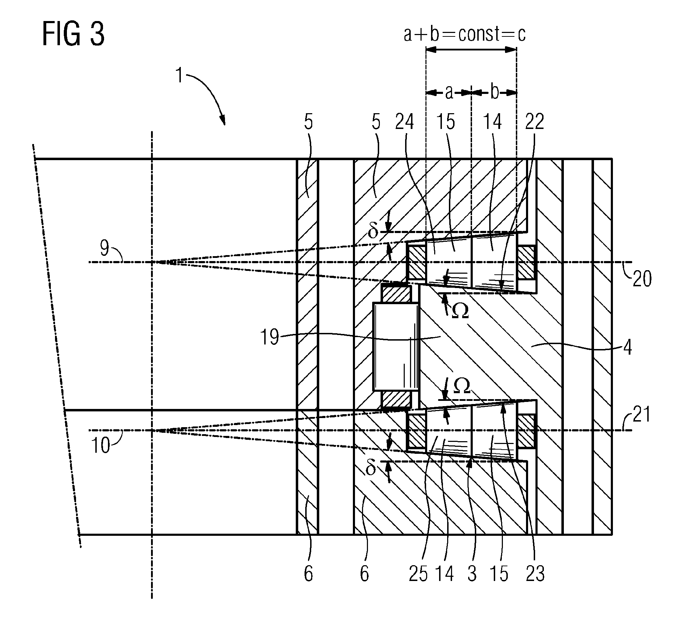

FIG 1 mit FIG 3 zeigen eine erfindungsgemäße Baugruppe beinhaltend eine erste Kegelrollenwälzkörperanordnung 2 und eine zweite Kegelrollenwälzkörper-anordnung 3, parallel übereinander ausgeführt. Die erste und zweite Kegelrollenwälzkörperanordnung 2, 3 weisen jeweils eine Mehrzahl an kegelstumpfförmigen Wälzkörpern auf, deren Mantelflächen 26, 27, 28, 29 als Roll- bzw. Wälzflächen dienen und die jeweils eine Mittelachse 20, 21 haben um die die Rotationsbewegung des jeweiligen Wälzkörpers im Betrieb erfolgt. Zudem umfassen die Kegelrollenwälzkörperanordnungen 2, 3 jeweils Wälzkörperkäfige, beispielsweise aus Messing. Die Mittelachsen 20, 21 aller kegelstumpfförmigen Wälzkörper der ersten Kegelrollenwälzkörperanordnung 2 liegen in einer Drehebene 9 der ersten Kegelrollenwälzkörperanordnung. Gleiches gilt für die Mittelachsen 20, 21 aller kegelstumpfförmigen Wälzkörper der zweiten Kegelrollenwälzkörperanordnung 3, diese liegen in einer Drehebene 10 der zweiten Kegelrollenwälzkörperanordnung.

Parallel übereinander ausgeführt bedeutet also insbesondere, dass die Drehebenen 9, 10 der ersten Kegelrollenwälzkörperanordnung 2 und der zweiten Kegelrollenwälzkörperanordnung 3 parallel zueinander angeordnet sind und sich nicht schneiden. Folglich schneiden sich auch die Mittelachsen 20, 21 der kegelförmigen Wälzkörper der ersten Kegelrollenwälzkörperanordnung 2 nicht mit denen der zweiten Kegelrollenwälzkörperanordnung 3.

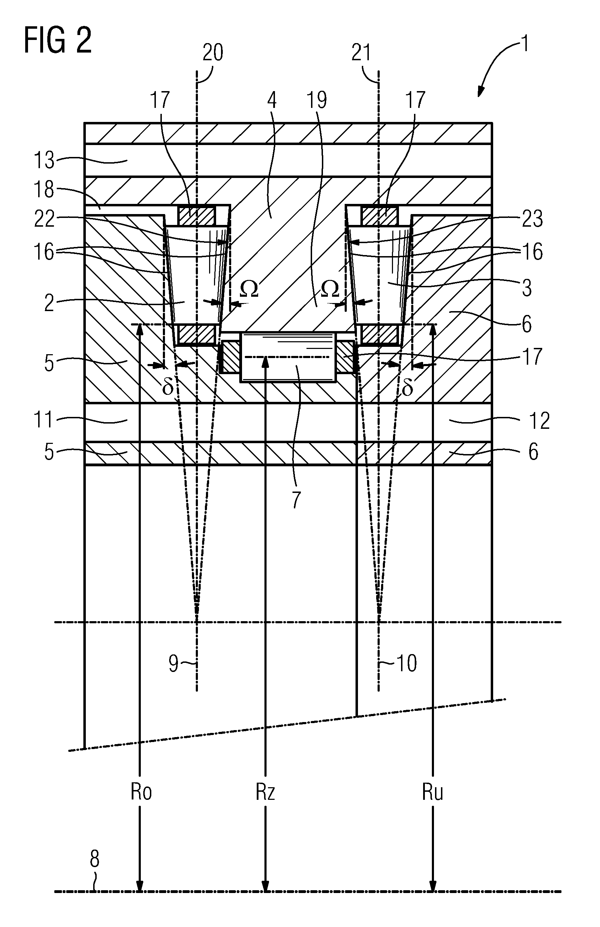

Gut zu sehen in FIG 2 ist hierbei die Hauptachse 8 der Drehung des gelagerten Teiles, der erfindungsgemäß ein Rotor, bzw. die Welle eines Rotors einer Windkraftanlage sein kann. Die Hauptachse 8 ist zugleich die Mittelachse der Lagerungsanordnung und fällt mit der Drehachse des gelagerten Teils zusammen. Demzufolge zeigen beispielsweise die in FIG 1 bis FIG 3 beschriebenen Ausgestaltungen das Hauptlager eines Rotors einer Windkraft-/ energieanlage. Der Nasenring 4 liegt mittig und dessen Nase 19 wird von Tragring 5 und Haltering 6 umfasst und eben durch jene genannten Kegelrollenwälzkörperanordnungen 2, 3 gelagert. In den ausgeführten Zeichnungen dienen die Kegelrollenwälzlageranordnungen 2, 3 zur Lagerung aller axialen Kraftanteile. Erfindungsgemäß sind diese Kegelrollenwälzlageranordnungen 2, 3 dabei parallel zueinander angeordnet.

Dies bedeutet, die Drehebenen 9, 10 der Kegelrollenwälzkörperanordnungen 2, 3, in welchen sich diese Kegelwälzkörperanordnungen bei rotatorischer Bewegung um die axiale Hauptachse 8 drehen, schneiden sich in der Praxis nicht. Aufgrund dieses wesentlichen Vorteiles der erfindungsgemäßen Baugruppe 1 fallen die Schnittpunkte der durch die Ebenen 9, 10 definierten in FIG 1 mit FIG 3 als sichtbare Achsen dargestellt nicht zusammen, auch nicht im Bereich der Mitte der gesamten Lagerbaugruppe, welche durch die Hauptachse 8 definiert wird.

In einer nicht gezeigten speziellen Ausführungsform kann ein Lager zur Verfügung gestellt werden, bei dem beispielsweise eine Wälzkörperanordnung in einem Abschnitt seines Umfangs kegelstumpfförmige Wälzkörper aufweist und in einem weiteren Abschnitt seines Umfangs zylinderrollenförmige Wälzkörper. Ein solches Lager kann verwendet werden, wenn beispielsweise keine vollständige Umlaufbewegung ausgeführt werden muss, sondern die Rotation des Lagers nur über einen bestimmten Winkel oder Kreisabschnitt ausgeführt wird. Durch die Auswahl verschiedener spezieller Wälzkörperformen kann das Lager in seiner Belastbarkeit sehr genau an die Anforderungen und auftretende Kräfte angepasst werden.

Es ist in den Zeichnungen FIG 1 mit FIG 3 gut dargestellt, dass es im Punkt der Mitte der gesamten Lagerbaugruppe (8)1 unterschiedliche Orte gibt, an denen sich diese Achsen bzw. Ebenen 9 und 10 mit der Hauptachse 8 der Drehung schneiden. Die Kegelrollenwälzkörperanordnung 2 ist angeordnet zwischen Nasenring 4 und Tragring 5 und nimmt somit die axialen Kräfte auf, die zwischen Nasenring 4 und Tragring 5 übertragen werden sollen. Die Ebene 9, in welcher die Kegelrollenwälzkörperanordnung 2 um die Hauptachse 8 rotiert, liegt demzufolge lotrecht zur Hauptachse 8. Die Kegelrollenwälzkörperanordnung 3 ist angeordnet zwischen Nasenring 4 und Haltering 6 und nimmt somit die axialen Kräfte auf, die zwischen Nasenring 4 und Haltering 6 übertragen werden sollen. Die Ebene 10, in welcher die Kegelrollenwälzkörperanordnung 3 um die Hauptachse 8 rotiert, liegt ebenfalls lotrecht zur Hauptachse 8 der Drehung. Tragring 5 und Haltering 6 sind als zwei Einzelringe ausgebildet, die bei einer Montage der Baugruppe 1 nach Einlegen der Kegelrollenwälzkörperanordnungen 2, 3 der Wälzkörperanordnung 7, der Wälzkörperkäfige 17 und des Nasenrings 4 zusammengesetzt und miteinander fest verbunden werden. Die Kegelrollenwälzkörperanordnungen 2, 3 nehmen dabei Kräfte auf, was sich in einer Verformung der Wälzkörper äußert. Ebenso können dabei Kräfte beispielsweise auf den zumindest mittelbar mit einem Fundament der Anlage verbundenen, feststehenden Nasenring 4 abgeleitet werden. Der Nasenring 4 ist hierbei der in radialer Richtung aussenliegende Ring der Baugruppe 1 und weist an seinem in radialer Richtung inneren Umfangsbereich eine umlaufende Nase 19 auf. Diese Nase 19 weist einen schwalbenschwanzförmigen Querschnitt auf, wobei sich der Querschnitt der Nase 19 in radialer Richtung nach außen, d.h. in Richtung von der Hauptachse 8 weg, verjüngt. Die Nase 19 weist Flankenflächen 22, 23 auf, auf denen Wälzkörper 24, 25 wälzen.

FIG 3 zeigt eine beispielhafte Ausgestaltung der Erfindung, in der innerhalb der Kegelrollenwälzkörperanordnung 2 sowie innerhalb der Kegelrollenwälzkörperanordnung 3 jeweils zwei unterschiedliche Sorten oder Arten von Kegelwälzkörpern 14, 15 vorhanden sind. Unter unterschiedlichen Sorten von Kegelwälzkörpern sollen insbesondere Wälzkörper unterschiedlicher Dimensionierung verstanden werden, wobei im gezeigten Ausführungsbeispiel die einzelnen Kegelwälzkörper 14, 15 kegelförmig sind und in ihrer Dimensionierung so aufeinander abgestimmt sind, dass zwei benachbarte Kegelwälzkörper 14, 15 in montierter Position einen im Wesentlichen durchgängigen, zweiteiligen kegelförmigen Wälzkörper bilden. Die Abstände a, b definieren dabei die Höhe der Kegelwälzkörper entlang ihrer Achsrichtung. Dabei können die Abstände a, b gleiches Maß betragen. Selbstverständlich kann pro Kegelrollenwälzkörperanordnung 2, 3 auch, wie regulär bekannt, nur eine Sorte von Wälzkörpern verwendet werden. Diese Abstände, die gleichermaßen die Höhe der einzelnen Wälzkörper- Sorten 14, 15 innerhalb einer Kegelrollenwälzkörperanordnung bilden, können ein unterschiedliches Maß aufweisen. a ist die Höhe einer Sorte von Kegelrollenwälzkörpern 14 innerhalb einer Körperanordnung. b ist die Höhe einer zweiten Sorte von Kegelrollenwälzkörpern 15 innerhalb einer Körperanordnung. Das Gesamtmaß c, also die Gesamthöhe der Kegelrollenwälzkörperanordnung c = a + b einer Kegelrollenwälzkörperanordnung 2, 3 ist jedoch stets gleich groß, also a + b = constant. In einer weiteren Ausgestaltung der Erfindung setzt sich diese Gesamthöhe c aus mehreren einzelnen Sorten von Kegelrollenwälzkörpern innerhalb einer Körperanordnung zusammen. Auch dann gilt: a + b + ... +... +... +... = constant = c.

Stets konstant ist gemäß einer beispielhaften Ausgestaltung der Erfindung, wie beispielweise in FIG 1 mit FIG 3 ersichtlich, die Steigung des Wälzkörperdurchmessers der jeweiligen Kegelrollenwälzkörperanordnung 2 bzw. 3, bezeichnet in FIG 3 durch die Winkel Ω und die Winkel δ. Die Winkel Ω und δ sind innerhalb einer Kegelrollenwälzkörperanordnung 2 bzw. 3 konstant, also bezogen auf das Maß c hin konstant. Die Winkel Ω und δ können jedoch bei der ersten Kegelrollenwälzkörperanordnung 2 andere Werte annehmen als bei der zweiten Kegelrollenwälzkörperanordnung 3. In den dargestellten Zeichnungen einer möglichen Ausgestaltung der Erfindung, also in den Zeichnungen FIG 1 mit FIG 3, wurde dargestellt eine Ausführung mit einem gleich großen Winkel: δ = Ω. Als vorteilhaft hat sich beispielsweise ein Winkel von δ = 1° = Ω erwiesen. In einer weiteren beispielhaften Ausgestaltung der Erfindung sind die Steigungswinkel unterschiedlich groß, sodass dann gilt δ ≠ Ω.

In einer der dargestellten Ausführungsformen der Erfindung gemäß FIG 1 mit FIG 3 verfügen sämtliche Kegelrollenwälzkörperanordnungen 2, 3 in der Baurgruppe 1 identisch gleiche Formen und Abmessungen. Dann gilt: Die Abmessungen und Winkel a2 , b2 , c2 , δ2 , Ω2 der einen Kegelrollenwälzkörperanordnungen, beispielsweise der Kegelrollenwälzkörperanordnung 2, haben gleiche Werte wie a3, b3, c3, δ3, Ω3 einer anderen Kegelrollenwälzkörperanordnung 3. In einer weiterführenden beispielhaften Ausgestaltung der Erfindung können mindestens eine weitere Kegelrollenwälzkörperanordnung mit Index n mit ebenfalls gleichen Formen und Abmessungen vorhanden sein, sodass dann gilt a2 = a3 = ... = an sowie b2 = b3 = ... = bn sowie c2 = c3 = ... = cn sowie δ2 = δ3 = ... = δn sowie Ω 2 = Ω 3 = ... = Ωn.

In dem gemäß FIG 1 mit FIG 3 dargestelltem Beispiel sind auch Abstände der Stirnseiten der Kegelrollenwälzkörperbahnen von der Hauptachse 8, also der Abstand Ro, und auch der Abstand Ru, bei Drehung um die Hauptachse 8 identisch hinsichtlich Abmessung. Gemäß in FIG 1 mit FIG 3 dargestelltem Beispiel gilt also Ro = Ru. In einer weiteren beispielhaften Ausgestaltung der Erfindung können diese Abstände unterschiedlich sein, sodass gilt: Ro ≠ Ru.

In einer der dargestellten Ausführungsformen der Erfindung gemäß FIG 1 mit FIG 3 existiert mindestens eine Wälzkörperanordnung 7 senkrecht zu den Kegelrollenwälzkörperanordnungen 2, 3, welche alle auftretenden radialen Kräfte aufnimmt, die zwischen Nasenring 4 und Tragring 5 während des Betriebes oder Stillstandes der Baugruppe auftreten. Ebenso existiert dort mindestens eine Wälzkörperanordnung 7 senkrecht zu den Kegelrollenwälzkörperanordnungen 2, 3 die alle radialen Kräfte aufnimmt, die zwischen Nasenring 4 und Haltering 6 auftreten. Zeichnungsgemäß ist dies in der vorliegenden beispielhaften Ausgestaltung der Erfindung eine einzelne Zylinderrollenanordnung. Zeichnungsgemäß besteht diese Zylinderrollenanordnung aus einzelnen Zylinderrollen als Wälzkörpern. In einer weiteren Ausgestaltung der Erfindung können ebenso Tonnenrollen oder reguläre Kugeln, beispielsweise im Sinne der bekannten Ausgestaltungsform des Vierpunktkugellagers, eingesetzt werden, um alle auftretenden radialen Kräfte aufzunehmen. Auch eine Kombination von mehreren Wälzkörpertypen ist, in einer noch weiteren Ausgestaltung der Erfindung, denkbar, solange dadurch alle auftretenden radialen Kräfte aufgenommen werden.

In einer der dargestellten Ausführungsformen der Erfindung gemäß FIG 1 mit FIG 3 sind gut beispielhaft zu erkennen jeweils verschiedene Abschrägungen beziehungsweise schräge Ebenen. Beispielsweise sind jeweils in Nasenring 4 und jeweils in Tragring 5 und jeweils in Haltering 6 zueinander korrespondierende schräge Ebenen 16 vorhanden. Auf diesen Ebenen rollen beziehungsweise gleiten die Kegelrollenwälzkörper der Kegelrollenwälzkörperanordnungen 2, 3. Praxisgemäß sind diese Ebenen oder schrägen Flächen in der Regel gefettet oder geölt, oder mit einem gängigen anderen Schmiermittel benetzt, um ein möglichst reibungsfreies gegenseitiges Verdrehen von Haltering 6 und Nasenring 4, sowie von Nasenring 4 und Tragring 5 zu ermöglichen. Beispielhaft erfindungsgemäß dargestellt sind ebenso jeweilige Wälzkörperkäfige 17, die für eine definierte Beabstandung der Wälzkörper innerhalb einer jeweiligen Wälzkörperanordnung sorge tragen. Die Wälzkörperkäfige 17 können beispielsweise aus Messing gefertigt sein, welches ein weicheres Material ist als Stahl, aus dem in der Regel die Wälzkörper und die Ringe der Lageranordnung gefertigt sind. Dadurch ist es ermöglicht, dass die Wälzkörperkäfige 17 radiale Kraftanteile aufnehmen können, die beispielsweise bei Verkippung oder bestimmten dynamischen Belastungsfällen der Lageranordnung auftreten. Bis zu einem gewissen Maß ist dadurch mittelbare Gleitreibung zwischen den Wälzkörpern und den Lagerringen zugelassen. Durch Vorsehen solcher Wälzkörperkäfige 17 können außerdem die sonst üblichen Borde oder Führungsrillen, die normalerweise in einen der Lagerringe zur Führung der Wälzkörper eingearbeitet sind, vermieden werden. Derartige Borde oder Führungsrillen neigen häufig zum Ausbrechen und bilden daher einen nicht zu vernachlässigenden Grund für Ausfälle von Lageranordnungen. Relativ weiche Wälzkörperkäfige und die Vermeidung von Borden oder Führungsrillen erhöhen daher die Betriebssicherheit derartiger Lageranordnungen.

Gemäß FIG 1 mit FIG 3 nicht separat und eingehend dargestellt sind obligatorische Dichtungsanordnungen zur Abdichtung aller regulär vorhandenen Lagerspalte 18 der Baugruppe 1. Hier können alle herkömmlichen Dichtungssysteme eingesetzt werden, die für die Abdichtung zweier gegeneinander verdrehbarer Komponenten, beispielsweise Wälzlager, Großwälzlager, et cetera verwendet werden können.

Gemäß FIG 1 mit FIG 3 ebenso nicht separat und eingehend dargestellt sind obligatorische Kühl- und Heizvorrichtungen, die regulär für die für die Beheizung oder Kühlung von Lagern, Wälzlagern, Großwälzlagern, et cetera verwendet werden können.

In einer der dargestellten Ausführungsformen der Erfindung gemäß FIG 1 mit FIG 3 sind gut sichtbar die Bohrungen 11, 12, 13 in welchen oder durch welche schraubenartige Elemente geführt werden können, um Anschlusskonstruktionen an die Baugruppe entweder an Tragring 5, oder an Haltering 6, oder an Nasenring 4 zu befestigen.

Solche Anschlusskonstruktionen können in einer weiteren Ausgestaltung der Erfindung auch an mehreren dieser Ringe entweder einseitig oder beidseitig mittels Schraubung in Bohrungen 11, 12, 13 befestigt werden. In einer weiteren Ausgestaltung der Erfindung ist eine solch genannte Befestigung auch mittels Verschweißung, Vernietung, oder durch Anklemmung einer entsprechenden Vorrichtung an der Anschlusskonstruktion möglich.

### Bezugszeichenliste für anhängende Zeichnungen

- 1: Baugruppe
- 2: Erste Kegelrollenwälzkörperanordnung
- 3: Zweite Kegelrollenwälzkörperanordnung
- 4: Nasenring, mit oder ohne Verzahnung
- 5: Tragring
- 6: Haltering
- 7: Wälzkörperanordnung
- 8: Hauptachse der Drehung des gelagerten Teiles, z.B.: Rotor einer Windkraftanlage
- 9: Drehebene der ersten Kegelrollenwälzkörperanordnung
- 10: Drehebene der zweiten Kegelrollenwälzkörperanordnung
- 11: Bohrung in Tragring
- 12: Bohrung in Haltering
- 13: Bohrung in Nasenring
- 14: Erste Sorte von Wälzkörpern innerhalb einer Kegelrollenwälzkörperanordnung
- 15: Zweite Sorte von Wälzkörpern innerhalb einer Kegelrollenwälzkörperanordnung
- 16: Schräge Ebenen in Tragring, Nasenring und Haltering
- 17: jeweiliger Wälzkörperkäfig
- 18: jeweiliger Lagerspalt
- 19: Nase
- 20, 21: Mittelachsen eines Wälzkörpers
- 22, 23: Flankenflächen der Nase
- 24, 25: Wälzkörper
- 26, 27, 28, 29: Mantelfläche der oder des Wälzkörpers

- Ω: Steigungswinkel einer Kegelrollenwälzkörperanordnung
- δ: Steigungswinkel einer Kegelrollenwälzkörperanordnung
- a: Höhe einer einzelnen Wälzkörper-Sorte
- b: Höhe einer einzelnen Wälzkörper-Sorte
- c: Gesamtheit der Höhen aller Wälzkörper-Sorten
- Ro: Abstand der Stirnseite der ersten Kegelrollenwälzkörperanordnung von der Hauptachse der Drehung
- Ru: Abstand der Stirnseite der ersten Kegelrollenwälzkörperanordnung von der Hauptachse der Drehung
- Rz: Abstand der Mittenachse der mindestens einen Wälzkörperanordnung von der Hauptachse der Drehung

## Patentansprüche

1. Baugruppe (1) als Lageranordnung zur drehenden Lagerung von Maschinen- und Anlagenteilen beinhaltend Nasenring (4), Tragring (5) und Haltering (6), insbesondere eines Großwälzlagers zur Hauptlagerung eines Rotors einer Windkraftanlage, und weiterhin beinhaltend mehrere um die Hauptachse (8) der Drehung um die axiale Richtung umlaufend abrollende Kegelrollenwälzlageranordnungen (2) (3), insbesondere mindestens zwei Kegelrollenwälzkörperanordnungen (2) (3), und weiterhin beinhaltend mindestens eine senkrecht zu diesen Kegelrollenwälzkörperanordnungen angeordneten Wälzlageranordnung (7) zur Lagerung radialer Kraftanteile, insbesondere eine Zylinderrollenanordnung (7), **gekennzeichnet dadurch, dass**
die mehreren Kegelrollenwälzlageranordnungen (2) (3) zur Lagerung aller axialer Kraftanteile parallel zueinander angeordnet sind und sich die Ebenen (9) (10) dieser Kegelrollenwälzkörperanordnungen, in welchen sich diese Kegelwälzkörperanordnungen bei rotatorischer Bewegung des gelagerten Teiles um die axiale Hauptachse (8) drehen, sich praktisch nicht schneiden.

2. Baugruppe als Lageranordnung nach Anspruch 1,
**gekennzeichnet dadurch, dass** mindestens eine Kegelrollenwälzkörperanordnung (2) (3) zwischen Nasenring (4) und Tragring (5) angeordnet ist und/oder dass
mindestens eine Kegelrollenwälzkörperanordnung (2) (3) zwischen Nasenring (4) und Haltering (6) angeordnet ist

3. Baugruppe als Lageranordnung nach mindestens einem der vorgenannten Ansprüche, **gekennzeichnet dadurch, dass**
der Nasenring (4) mit Außenverzahnung oder Innenverzahnung oder segmentweiser Verzahnung, oder gänzlich ohne Verzahnung ausgeführt sein kann.

4. Baugruppe als Lageranordnung nach mindestens einem der vorgenannten Ansprüche, **gekennzeichnet dadurch, dass**
innerhalb einer Kegelrollenwälzkörperanordnung (2) (3) mindestens zwei unterschiedliche Sorten von Kegelwälzkörpern (14) (15) vorhanden sein können, die jeweils in der radialen Richtung einen kontinuierlich steigenden oder kontinuierlich fallenden Wälzkörperdurchmesser besitzen, wobei bevorzugt die Steigung des Wälzkörperdurchmessers innerhalb einer Kegelrollenwälzkörperanordnung (2) (3) stets konstant ist.

5. Baugruppe als Lageranordnung nach mindestens einem der vorgenannten Ansprüche, **gekennzeichnet dadurch, dass**
sämtliche Kegelrollenwälzkörperanordnungen (2) (3) in der Baurgruppe (1) identisch gleiche Formen und Abmessungen besitzen.

6. Baugruppe als Lageranordnung nach mindestens einem der vorgenannten Ansprüche, **gekennzeichnet dadurch, dass**
die mindestens eine Wälzkörperanordnung (7) senkrecht zu den Kegelrollenwälzkörperanordnungen (2) (3) alle radialen Kräfte lagernd aufnimmt, die zwischen Nasenring (4) und Tragring (5) auftreten
und/oder dass
die mindestens eine Wälzkörperanordnung (7) senkrecht zu den Kegelrollenwälzkörperanordnungen (2) (3) alle radialen Kräfte aufnimmt, die zwischen Nasenring (4) und Haltering (6) auftreten.

7. Baugruppe als Lageranordnung nach mindestens einem der vorgenannten Ansprüche, **gekennzeichnet dadurch, dass**
jeweils in Nasenring (4) und jeweils in Tragring (5) und jeweils in Haltering (6) zueinander korrespondierende schräge Ebenen (16) vorhanden sind, die jeweils in direktem Kontakt mit den Kegelrollenwälzkörperanordnungen (2) (3) stehen.

8. Baugruppe als Lageranordnung nach mindestens einem der vorgenannten Ansprüche, **gekennzeichnet dadurch, dass**
Anschlusskonstruktionen an die Baugruppe entweder an Tragring (5), oder an Haltering (6), oder an Nasenring (4), oder an mehreren dieser Ringe entweder einseitig oder beidseitig, insbesondere mittels Schraubung in Bohrungen (11) (12) (13), befestigt werden können.

9. Lager, insbesondere Großwälzlager zur Lagerung von Komponenten wie einem Rotor einer Windkraftanlage oder einem Kran, umfassend einen Nasenring (4) sowie koaxial zu dem Nasenring (4) angeordnet und innenliegend einen Tragring (5) und einen Haltering (6), wobei der Nasenring (4) an einer radial in Richtung einer Hauptachse (8) einwärts gewandten Seite wenigstens eine umlaufende Ausformung oder Nase (19) aufweist, wobei wenigstens eine kegelstumpfförmige Wälzkörper (24, 25) umfassende erste Wälzkörperanordnung (2) vorgesehen ist und wenigstens eine zylinderrollenförmige und/oder kegelstumpfförmige Wälzkörper (24, 25) umfassende zweite Wälzkörperanordnung (3) vorgesehen ist, wobei eine der Wälzkörperanordnungen (2, 3) zwischen Nasenring (4) und Tragring (5) angeordnet ist und die jeweils andere der Wälzkörperanordnungen (2, 3) zwischen Nasenring (4) und Haltering (6) angeordnet ist und wobei jeweils eine Wälzkörperanordnung (2, 3) auf jeweils einer der Flankenflächen (22, 23) der Ausformung oder Nase (19) unter Drehung der Wälzkörper (24, 25) um ihre jeweiligen Mittelachsen (20, 21) wälzt, so dass der Nasenring (4) relativ zu Tragring (5) und Haltering (6) um eine mit Tragring (5) und Haltering (6) gemeinsame Hauptachse (8) rotatorisch bewegbar ist und wobei die erste und die zweite Wälzkörperanordnung (2, 3) relativ zueinander so angeordnet sind, dass die Mittelachsen mehrerer, vorzugsweise aller, kegelstumpfförmigen Wälzkörper (24, 25) der ersten Wälzkörperanordnung (2) in einer ersten Drehebene (9) liegen und die Mittelachsen mehrerer, vorzugsweise aller, zylinderförmigen oder kegelstumpfförmigen Wälzkörper (24, 25) der zweiten Wälzkörperanordnung (3) in einer zweiten Drehebene (10) liegen und die erste Drehebene (9) und die zweite Drehebene (10) parallel zueinander ausgerichtet sind.

10. Lager nach Anspruch 9, **gekennzeichnet dadurch, dass** die umlaufende Ausformung oder Nase einen im Wesentlichen trapezoiden, insbesondere schwalbenschwanzförmigen, und/oder sich in radialer Richtung nach außen oder von der Hauptachse wer hin verjüngenden Querschnitt aufweist, insbesondere wobei die Flankenflächen (22, 23) der Ausformung oder Nase (4) wenigstens einen Winkel (Ω) mit einer zur Hauptachse (8) senkrechten Ebene einschließen, vorzugsweise einen Winkel (Ω) von jeweils 1°, insbesondere so, dass die Flankenflächen (22, 23) der Ausformung oder Nase korrespondierend zu der Kegelstumpfform der kegelstumpfförmigen Wälzköper der ersten und zweiten Wälzkörperanordnung und/oder Wälzflächen des Tragrings (5) und des Halterings (6) ausgebildet sind, so dass die erste Drehebene (9) und die zweite Drehebene (10) parallel zueinander ausgerichtet sind,

11. Lager nach einem der Ansprüche 9 oder 10, **gekennzeichnet dadurch, dass** die erste und zweite Wälzkörperanordnung (2, 3) im Wesentlichen identische kegelstumpfförmigen Wälzkörper (24, 25) umfassen, in denen ein Winkel (δ = Ω) definiert ist, der von einer Mantelfläche (26, 27, 28, 29) und einer Mittellachse (20, 21) des jeweiligen Wälzkörpers (24, 25) eingeschlossen ist, der vorzugsweise 1° beträgt,
oder dass die erste und zweite Wälzkörperanordnung (2, 3) im Wesentlichen identische kegelstumpfförmigen, insbesondere schiefe kegelstumpfförmige, Wälzkörper (24, 25) umfassen, in denen wenigstens zwei Winkel (δ, Ω), insbesondere unterschiedlich, definiert sind, die von jeweils einer Mantelfläche (26, 27, 28, 29) und einer Mittellachse (20, 21) des jeweiligen Wälzkörpers (24, 25) eingeschlossen sind, insbesondere so, dass eine Vorspannung auf die erste und zweite Wälzkörperanordnung wirkt.

12. Lager nach einem der Ansprüche 9 bis 11, **gekennzeichnet dadurch, dass** wenigstens eine weitere Wälzlageranordnung (7) im Wesentlichen senkrecht zu den Drehebenen (9, 10) der ersten und zweiten Wälzkörperanordnung angeordnet ist, die zur Lagerung, insbesondere zur Aufnahme und/oder Weiterleitung, radialer Kraftanteile vorgesehen ist.

13. Lager nach einem der Ansprüche 9 bis 12, **gekennzeichnet dadurch, dass** wenigstens ein kegelstumpfförmiger Wälzkörper (24, 25) der ersten und /oder zweiten Wälzkörperanordung (2, 3) aus benachbart zueinander angeordneten ersten und zweiten Kegelwälzkörpern (14, 15) gebildet ist, die in montierter Position einen im Wesentlichen durchgängigen, zweiteiligen kegelstumpfförmigen Wälzkörper bilden, wobei der erste Kegelwälzkörper (14) eine gleiche Länge aufweist wie der zweite Kegelwälzkörper (15) oder wobei der erste Kegelwälzkörper (14) eine andere Länge aufweist wie der zweite Kegelwälzkörper (15).

14. Lager nach einem der Ansprüche 9 bis 13, **gekennzeichnet dadurch, dass** wenigstens eine der Wälzkörperanordnungen (2, 3) einen Wälzkörperkäfig (17) zur Führung der kegelstumpfförmigen Wälzkörper, vorzugsweise aus Messing oder einer Messinglegierung, umfasst, der vorzugsweise wenigstens teilweise radiale Anteile von auf das Lager wirkenden Kräften aufnimmt und/oder weiterleitet.

15. Windkraftanlage, umfassend wenigstens einen Rotor mit einer Hauptachse sowie einer Baugruppe nach einem der Ansprüche 1 bis 8 oder einem Lager nach einem der Ansprüche 9 bis 14 zur drehbaren Lagerung der Hauptachse des Rotors.

## Claims

1. An assembly (1) as bearing arrangement for the rotational mounting of machine and plant components, comprising nose ring (4), support ring (5) and retaining ring (6), in particular of a large rolling bearing serving as the main mounting of a rotor of a wind power installation, and further comprising a plurality of tapered-roller rolling bearing arrangements (2) (3), particularly at least two tapered-roller rolling element arrangements (2) (3), which roll circulatingly about the main axis (8) of the rotation about the axial direction, and further comprising at least one rolling bearing arrangement (7), particularly a cylindrical roller arrangement (7), that is arranged perpendicularly to said tapered-roller rolling element arrangements and is operative to support radial force components, **characterized in that**
the plurality of tapered-roller rolling bearing arrangements (2) (3) for supporting all axial force components are arranged parallel to one another, and the planes (9) (10) of said tapered-roller rolling element arrangements in which said tapered rolling element arrangements rotate about the axial main axis (8) upon rotational movement of the mounted part do not intersect in practice.

2. The assembly as bearing arrangement according to claim 1,
**characterized in that** at least one tapered-roller rolling element arrangement (2) (3) is arranged between nose ring (4) and bearing ring (5),
and/or that
at least one tapered-roller rolling element arrangement (2) (3) is arranged between nose ring (4) and retaining ring (6).

3. The assembly as bearing arrangement according to at least one of the preceding claims, **characterized in that**
the nose ring (4) can be implemented with outer teeth or inner teeth or segmentally arranged teeth, or entirely without teeth.

4. The assembly as bearing arrangement according to at least one of the preceding claims, **characterized in that**
present in one tapered-roller rolling element arrangement (2) (3) are at least two different types of tapered rolling elements (14) (15), each having a continuously increasing or continuously decreasing rolling element diameter in the radial direction, whereby preferably the increase in the rolling element diameter within a tapered-roller rolling element arrangement (2) (3) is always constant.

5. The assembly as bearing arrangement according to at least one of the preceding claims, **characterized in that**
all the tapered-roller rolling element arrangements (2) (3) in the assembly (1) have identically the same shapes and dimensions.

6. The assembly as bearing arrangement according to at least one of the preceding claims, **characterized in that**
the at least one rolling element arrangement (7) perpendicular to the tapered-roller rolling element arrangements (2) (3) load-bearingly absorbs all the radial forces occurring between the nose ring (4) and the support ring (5),
and/or that
the at least one rolling element arrangement (7) perpendicular to the tapered-roller rolling element arrangements (2) (3) absorbs all the radial forces occurring between the nose ring (4) and the retaining ring (6).

7. The assembly as bearing arrangement according to at least one of the preceding claims, **characterized in that**
mutually corresponding oblique planes (16), each of which is in direct contact with the respective tapered-roller rolling element arrangements (2) (3), are present respectively in the nose ring (4) and in the support ring (5) and in the retaining ring (6).

8. The assembly as bearing arrangement according to at least one of the preceding claims, **characterized in that**
adjacent structures can be attached to the assembly either at support ring (5), or at retaining ring (6), or at nose ring (4), or at more than one of said rings, either on one side or on both sides, particularly by screw fastening in bores (11) (12) (13).

9. A bearing, particularly a large rolling bearing for the mounting of components such as a wind turbine rotor or a crane, comprising a nose ring (4) and, disposed coaxially with the nose ring (4) and internally, a support ring (5) and a retaining ring (6), wherein the nose ring (4) comprises, on a side facing radially inward toward a main axis (8), at least one circumferential formation or nose (19), wherein at least one first rolling element arrangement (2) comprising conical frustum shaped rolling elements (24, 25) is provided and at least one second rolling element arrangement (3) comprising cylindrical roller shaped and/or conical frustum shaped rolling elements (24, 25) is provided, wherein one of the rolling element arrangements (2, 3) is disposed between the nose ring (4) and the support ring (5) and the respective other one of the rolling element arrangements (2, 3) is disposed between the nose ring (4) and the retaining ring (6) and wherein each rolling element arrangement (2, 3) rolls on a respective one of the flank surfaces (22, 23) of the formation or nose (19) as the rolling elements (24, 25) rotate about their respective center axes (20, 21), such that the nose ring (4) is movable in rotation relative to the support ring (5) and the retaining ring (6) about a main axis (8) shared in common with the support ring (5) and the retaining ring (6) and wherein the first and the second rolling element arrangements (2, 3) are so disposed relative to each other that the center axes of a plurality, preferably all, of the conical frustum shaped rolling elements (24, 25) of the first rolling element arrangement (2) lie in a first rotation plane (9) and the center axes of a plurality, preferably all, of the cylinder shaped or conical frustum shaped rolling elements (24, 25) of the second rolling element arrangement (3) lie in a second rotation plane (10) and the first rotation plane (9) and the second rotation plane (10) are aligned parallel to each other.

10. The bearing according to claim 9, **characterized in that** the circumferential formation or nose has an essentially trapezoidal, particularly dovetail-shaped, cross section and/or a cross section that tapers in the radial direction outwardly or away from the main axis, particularly wherein the flank surfaces (22, 23) of the formation or nose (4) make at least one angle (Ω) with a plane perpendicular to the main axis (8), preferably an angle (Ω) of 1° in each case, particularly such that the flank surfaces (22, 23) of the formation or nose are shaped correspondingly to the conical frustum shape of the conical frustum shaped rolling elements of the first and second rolling element arrangements and/or the rolling surfaces of the support ring (5) and of the retaining ring (6), such that the first rotation plane (9) and the second rotation plane (10) are aligned parallel to each other.

11. The bearing according to either of claims 9 or 10, **characterized in that** the first and second rolling element arrangements (2, 3) comprise substantially identical conical frustum shaped rolling elements (24, 25), in which an angle (δ = Ω) is defined that is formed by a jacket surface (26, 27, 28, 29) and a center axis (20, 21) of the particular rolling element (24, 25) and is preferably equal to 1°, and/or that the first and second rolling element arrangements (2, 3) comprise substantially identical conical frustum shaped, particularly asymmetrical conical frustum shaped, rolling elements (24, 25), in which at least two angles (δ, Ω) formed by a jacket surface (26, 27, 28, 29) and a center axis (20, 21) of the respective rolling element (24, 25) are defined, particularly differently, particularly in such a way that a bias acts on the first and second rolling element arrangements.

12. The bearing according to one of claims 9 to 11, **characterized in that** at least one additional rolling bearing arrangement (7) is disposed substantially perpendicular to the rotation planes (9, 10) of the first and second rolling element arrangements and is intended to support, particularly to absorb and/or transfer, radial force components.

13. The bearing according to one of claims 9 to 12, **characterized in that** at least one conical frustum shaped rolling element (24, 25) of the first and/or second rolling element arrangement (2, 3) is formed of adjacently disposed first and second tapered rolling elements (14, 15), which in the mounted position form a substantially continuous, two-part conical frustum shaped rolling element, wherein the first tapered rolling element (14) has the same length as the second tapered rolling element (15) or wherein the first tapered rolling element (14) has a different length from the second tapered rolling element (15).

14. The bearing according to one of claims 9 to 13, **characterized in that** at least one of the rolling element arrangements (2, 3) comprises a rolling element cage (17), preferably of brass or a brass alloy, which serves to guide the conical frustum shaped rolling elements and which preferably at least partially absorbs and/or transfers radial components of forces acting on the bearing.

15. A wind power installation comprising at least one rotor having a main axis, together with an assembly according to one of claims 1 to 8, or a bearing according to one of claims 9 to 14 for the rotational mounting of the main shaft of the rotor.

## Revendications

1. Bloc (1) en tant qu'ensemble palier pour le montage rotatif de parties de machine et d'installation, comprenant une bague à talon (4), une bague de support (5) et une bague de retenue (6), en particulier d'un palier à roulement de grande dimension pour le montage principal d'un rotor d'une éolienne, et comprenant en outre plusieurs ensembles paliers à roulement à rouleaux coniques (2) (3), en particulier au moins deux ensembles corps de roulement à rouleaux coniques (2) (3), tournant de manière périphérique autour de l'axe principal (8) de rotation dans la direction axiale, et comprenant également au moins un ensemble palier à roulement (7) disposé de manière perpendiculaire par rapport auxdits ensembles de corps de roulement à rouleaux coniques pour supporter des composantes de forces radiales, en particulier un ensemble rouleau cylindrique (7), **caractérisé en ce que**
les ensembles paliers à roulement à rouleaux coniques (2) (3) destinés à supporter toutes les composantes de forces axiales sont disposés parallèlement les uns aux autres, et **en ce que** les plans (9) (10) de ces ensembles corps de roulement à rouleaux coniques, dans lesquels tournent ces derniers lorsque la partie montée tourne autour de l'axe principal axial (8), ne se coupent pratiquement pas.

2. Bloc en tant qu'ensemble palier selon la revendication 1,
**caractérisé en ce qu'**au moins un ensemble corps de roulement à rouleaux coniques (2) (3) est disposé entre une bague à talon (4) et une bague support (5) et/ou en ce qu'au moins un ensemble corps de roulement à rouleaux coniques (2) (3) est disposé entre une bague à talon (4) et une bague de retenue (6).

3. Bloc en tant qu'ensemble palier selon au moins l'une des revendications précédentes, **caractérisé en ce que**
la bague à talon (4) peut être exécutée avec denture extérieure ou denture intérieure ou denture segmentée, ou entièrement sans denture.

4. Bloc en tant qu'ensemble palier selon au moins l'une des revendications précédentes, **caractérisé en ce que**,
à l'intérieur d'un ensemble corps de roulement à rouleaux coniques (2) (3), au moins deux différents types de corps de roulement conique (14) (15) peuvent être disponibles, qui ont respectivement un diamètre de corps de roulement continuellement croissant ou continuellement décroissant dans la direction radiale, le pas du diamètre de corps de roulement étant de préférence toujours constant à l'intérieur d'un ensemble corps de roulement à rouleaux coniques (2) (3).

5. Bloc en tant qu'ensemble palier selon au moins l'une des revendications précédentes, **caractérisé en ce que**
tous les ensembles corps de roulement à rouleaux coniques (2) (3) dans le bloc (1) ont des formes et des dimensions identiquement égales.

6. Bloc en tant qu'ensemble palier selon au moins l'une des revendications précédentes, **caractérisé en ce qu'**
au moins un ensemble corps de roulement (7) perpendiculaire aux ensembles corps de roulement à rouleaux coniques (2) (3) absorbent en supportant les forces radiales qui se produisent entre une bague à talon (4) et une bague de support (5) et/ou
**en ce qu'**au moins un ensemble corps de roulement (7) perpendiculaire aux ensembles corps de roulement à rouleaux coniques (2) (3) absorbe toutes les force radiales qui se produisent entre une bague à talon (4) et une bague de retenue (6).

7. Bloc en tant qu'ensemble palier selon au moins l'une des revendications précédentes, **caractérisé en ce que**
des plans (16) obliques correspondants les uns par rapport aux autres existent respectivement dans une bague à talon (4) et respectivement dans une bague de support (5) et respectivement dans une bague de retenue (6), lesdits plans étant respectivement en contact direct avec les ensembles corps de roulement à rouleaux coniques (2) (3).

8. Bloc en tant qu'ensemble palier selon au moins l'une des revendications précédentes, **caractérisé en ce que**
des constructions de raccordement au bloc peuvent être fixées soit à une bague de support (5), ou à une bague de retenue (6), ou à une bague à talon (4), ou à plusieurs de ces bagues soit sur un côté ou sur deux côtés, en particulier au moyen de vissage dans des trous (11) (12) (13).

9. Palier, en particulier palier à roulement de grande dimension pour le montage de composants comme un rotor d'une éolienne ou une grue, comprenant une bague à talon (4) ainsi qu'une bague de support (5) et une bague de retenue (6) disposées de manière coaxiale par rapport à la bague à talon (4) et à l'intérieur, la bague à talon (4) présentant sur un côté donnant vers l'intérieur radialement vers un axe principal (8) au moins une protubérance ou talon (19) périphérique, où au moins un premier ensemble corps de roulement (2) comprenant des corps de roulement (24, 25) en forme de cône tronqué est prévu et au moins un second ensemble corps de roulement (3) comprenant des corps de roulement (24, 25) en forme de rouleau cylindrique et/ou de cône tronqué est prévu, où l'un des ensembles corps de roulement (2, 3) est disposé entre bague à talon (4) et bague de support (5) et respectivement l'autre des ensembles corps de roulement (2, 3) est disposé entre bague à talon (4) et bague de retenue (6) et où respectivement un ensemble corps de roulement (2, 3) roule respectivement sur l'une des surfaces de flanc (22, 23) de la protubérance ou talon (19) sous rotation des corps de roulement (24, 25) respectivement autour de leurs axes médians (20, 21), de sorte que la bague à talon (4) par rapport à une bague de support (5) et à une bague de retenue (6) puisse être tournée autour d'un axe principal (8) commun à une bague de support (5) et à une bague de retenue (6) et où le premier et le second ensemble corps de roulement (2, 3) sont disposés l'un par rapport à l'autre de façon telle que les axes médians de plusieurs corps de roulement (24, 25), de préférence de tous les corps de roulement en forme de cône tronqué, du premier ensemble corps de roulement (2) sont situés dans un premier plan de rotation (9) et les axes médians de plusieurs corps de roulement (24, 25), de préférence de tous les corps de roulement de forme cylindrique ou en forme de cône tronqué, du second ensemble corps de roulement (3) sont situés dans un second plan de rotation (10) et le premier plan de rotation (9) et le second plan de rotation (10) sont alignés parallèlement l'un par rapport à l'autre.

10. Palier selon la revendication 9, **caractérisé en ce que** la protubérance périphérique ou talon présente une section essentiellement trapézoïdale, en particulier en queue d'aronde, et/ou diminuant en sens radial vers l'extérieur ou partant de l'axe principal, en particulier où les surfaces de flanc (22, 23) de la protubérance ou talon (4) incluent au moins un angle (Ω) avec un plan perpendiculaire à l'axe principal (8), de préférence un angle (Ω) de respectivement 1°, en particulier tel que les surfaces de flanc (22, 23) de la protubérance ou nez correspondant à la forme de cône tronqué des corps de roulement en forme de cône tronqué du premier et du second ensemble corps de roulement et/ou des surfaces de roulement de la bague de support (5) et de la bague de retenue (6) sont réalisées de façon à ce que le premier plan de rotation (9) et le second plan de rotation (10) soient alignés parallèlement l'un par rapport à l'autre.

11. Palier selon l'une des revendications 9 ou 10, **caractérisé en ce que** le premier et le second ensemble corps de roulement (2, 3) comprennent essentiellement des corps de roulement (24, 25) identiques en forme de cône tronqué, dans lesquels un angle (δ = Ω) est défini, qui est inclus par une surface latérale (26, 27, 28, 29) et un axe médian (20, 21) du corps de roulement (24, 25) respectif, qui est de préférence de 1°,
ou **en ce que** le premier et le second ensemble corps de roulement (2, 3) comprennent essentiellement des corps de roulement (24, 25) identiques en forme de cône tronqué, en particulier en forme de cône tronqué oblique, dans lesquels au moins deux angles (δ = Ω), en particulier différents, sont définis qui sont inclus respectivement par une surface latérale (26, 27, 28, 29) et un axe médian (20, 21) du corps de roulement (24, 25) respectif, en particulier de façon telle qu'une précontrainte s'exerce sur le premier et le second ensemble corps de roulement.

12. Palier selon l'une des revendications 9 à 11, **caractérisé en ce qu'**au moins un autre ensemble paliers à roulement (7) est disposé essentiellement perpendiculairement par rapport aux plans de rotation (9, 10) du premier et du second ensemble corps de roulement, qui est prévu pour supporter, en particulier pour absorber et/ou transmettre, des composantes de forces radiales.

13. Palier selon l'une des revendications 9 à 12, **caractérisé en ce qu'**au moins un corps de roulement en forme de cône tronqué (24, 25) du premier et/ou du second ensemble corps de roulement (2, 3) est réalisé à partir de premiers et de seconds corps de roulement coniques (14, 15) disposés de manière adjacente les uns par rapport aux autres, qui forment en position montée essentiellement un corps de roulement en forme de cône tronqué, en deux parties, traversant, où le premier corps de roulement conique (14) présente une longueur égale à celle du second corps de roulement conique (15) ou bien où le premier corps de roulement conique (14) présente une longueur différente de celle du second corps de roulement conique (15).

14. Palier selon l'une des revendications 9 à 13, **caractérisé en ce qu'**au moins l'un des ensembles corps de roulement (2, 3) comporte une cage de corps de roulement (17) pour le guidage des corps de roulement en forme de cône tronqué, de préférence en laiton ou en un alliage de laiton, qui absorbe et/ou transmet de préférence au moins en partie des composantes radiales de forces s'exerçant sur le palier.

15. Éolienne, comprenant au moins un rotor avec un axe principal ainsi qu'un bloc selon l'une des revendications 1 à 8 ou un palier selon l'une des revendications 9 à 14 pour le montage rotatif de l'axe principal du rotor.
